# FASCICULE DE BREVET EUROPEEN

(11) **EP 2 577 561 B1**
(45) Date de publication et mention de la délivrance du brevet: **18.10.2017**
(21) Numéro de dépôt: 11726900.1
(22) Date de dépôt: 25.05.2011
(51) Int. Cl.: H04N 1/192, G06K 9/00, G06T 7/00

(54) **EXTRACTION D'UN DOCUMENT DANS UNE SERIE D'IMAGES CAPTEES**
EXTRAKTION EINES DOKUMENTS BEI EINER SERIE AUS AUFGEZEICHNETEN BILDERN
EXTRACTION OF A DOCUMENT IN A SERIES OF RECORDED IMAGES

(30) Priorité: 27.05.2010 FR 1054116
(43) Date de publication de la demande: 10.04.2013
(73) Titulaire: MORPHO, 92130 Issy-Les-Moulineaux (FR)
(72) Inventeur: REVELIN, Stéphane, F-75015 Paris (FR); DOUBLET, Julien, F-75015 Paris (FR); VERILHAC, Michael, F-75015 Paris (FR); JOUINI, Soufiane, F-75015 Paris (FR); KETCHANTANG, William, F-75015 Paris (FR)
(74) Mandataire: Cabinet Plasseraud
(86) Numéro de dépôt international: PCT/FR2011/051189
(87) Numéro de publication internationale: WO 2011/148099

(56) Documents cités:
- US-A1- 2010 195 129
- US-B2- 7 593 144
- JIWON KIM ET AL: "The Office of the Past: Document Discovery and Tracking from Video", 20040627; 20040627 - 20040602, 27 juin 2004 (2004-06-27), pages 157-157, XP010761938,
- GUO JING ET AL: "Foreground motion detection by difference-based spatial temporal entropy image", TENCON 2004. 2004 IEEE REGION 10 CONFERENCE, vol. 1, 1 janvier 2004 (2004-01-01), pages 379-382, XP002629179,
- JIAN LIANG ET AL: "Camera-based analysis of text and documents: a survey", INTERNATIONAL JOURNAL OF DOCUMENT ANALYSIS AND RECOGNITION (IJDAR), SPRINGER, BERLIN, DE, vol. 7, no. 2-3, 1 juillet 2005 (2005-07-01), pages 84-104, XP019352711, ISSN: 1433-2825, DOI: DOI:10.1007/S10032-004-0138-Z
- SYLVAIN BOLTZ ET AL: "A Minimum-Entropy Procedure for Robust Motion Estimation", IMAGE PROCESSING, 2006 IEEE INTERNATIONAL CONFERENCE ON, IEEE, PI, 1 October 2006 (2006-10-01), pages 1249-1252, XP031048870, ISBN: 978-1-4244-0480-3
- TOYAMA K ET AL: "Wallflower: principles and practice of background maintenance", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 September 1999 (1999-09-20), pages 255-261, XP010350430, ISBN: 978-0-7695-0164-2
- CUCCHIARA R ET AL: "Improving shadow suppression in moving object detection with HSV color information", INTELLIGENT TRANSPORTATION SYSTEMS, 2001. PROCEEDINGS. 2001 IEEE AUGUST 25-29, 2001, PISCATAWAY, NJ, USA,IEEE, 25 August 2001 (2001-08-25), pages 334-339, XP010555793, ISBN: 978-0-7803-7194-1

## Description

La présente invention concerne les lecteurs de document et plus particulièrement les lecteurs de documents tels que des tickets de jeu.

Un lecteur de tickets de jeu correspond en général à une boîte présentant une face d'entrée dans laquelle on peut glisser le ticket de jeu à lire. Le ticket glissé dans la fente est ensuite entrainé à l'aide de rouleaux mécaniques jusqu'à un lecteur optique adapté pour extraire les informations indiquées sur le ticket de jeu considéré.

Des coûts de maintenance conséquents peuvent être associés à l'utilisation de tels lecteurs de documents. En effet, il convient de contrôler et de réparer régulièrement les rouleaux mécaniques et les accessoires mécaniques qui leurs sont associés.

On connaît de la publication de J. Kim et al « The Office of the Past : Document Discovery and Tracking from Video », in Combuter Vision and Pattern Récognition Workshop, 2004, un procédé de traitement de document permettant de suivre des mouvements d'objets sur la surface d'un bureau et de déterminer les positions relatives d'empilement de différents objets. En particulier, ce document décrit d'extraire d'une vidéo deux images correspondant aux moments avant et après qu'un document ait lieu, et de comparer ces images pour identifier un mouvement.

La présente invention vise à améliorer la situation.

Un premier aspect de la présente invention propose un procédé de traitement de document selon la revendication 1.

Un tel procédé de traitement permet avantageusement de suivre un document de manière automatique sur la base d'une série d'images captées lorsque ce document est déposé sur une surface du système de traitement. Un tel suivi de document au cours du temps est basé à la fois sur l'extraction de ce document au sein des différentes images captées prises en considération et sur la mise à jour de l'image de surface de fond courante après qu'un document ait été déposé ou retiré de cette surface de fond.

Puis, une fois qu'on a détecté la fin du mouvement, lorsque ce dernier correspond à un empilement de document, on est en mesure d'extraire une image du document à partir d'une des images captées et de fournir cette image du document pour en faire une lecture par tout type de moyen possible de lecture de document.

Un tel traitement est avantageusement adapté pour être appliqué à tout type de document, ne présentant de préférence pas une uniformité, dont on ne connait ni la forme ni le contenu a priori.

En procédant avec une carte d'entropie, il est possible d'augmenter la rapidité de traitement du document, et il est de ce fait possible d'en augmenter les performances, puisque la carte d'entropie n'est alors déterminée que dans une zone de recherche qui permet de localiser au moins grossièrement le document en mouvement. On réduit donc la lourdeur des calculs en évitant d'effectuer des calculs en dehors de la zone des images où se produit le mouvement.

La détermination d'un masque d'extraction permet de localiser en quelque sorte le document au sein des images captées et de suivre son mouvement au cours du temps. On peut ainsi déterminer à chaque image la localisation du document par rapport à l'image de surface de fond qui elle ne change pas tant que le mouvement du document en cours de suivi se prolonge. En effet, l'image de cette surface de fond n'est mise à jour qu'à la fin du mouvement du document. Ainsi, on calcule tout d'abord des premières valeurs d'entropie en se basant sur la différence de niveaux de gris entre l'image de fond courante et l'image captée donnée prise en considération.

On peut noter que la superposition de deux documents engendre une plus grande variation d'information que la superposition d'un document sur le plan de pose qui est homogène. Dans le premier cas, l'entropie sera donc plus élevée que dans le second.

De telles caractéristiques permettent d'utiliser des valeurs seuil différentes en fonction du recouvrement des masques d'extraction successifs. On peut ainsi avantageusement éviter d'éventuelles perturbations. Puis, le masque d'extraction complet est alors obtenu par union des première et seconde parties de masque d'extraction obtenues.

On entend par les termes 'image de surface de fond courante' une image qui représente la surface sur laquelle un nouveau document est posé. Il est donc prévu de mettre à jour cette image de surface de fond après que la fin d'un mouvement soit détectée. Il convient de noter dès à présent que le mouvement d'un document peut correspondre à un empilement de document ou bien inversement à un dépilement de document. Dans le cas où la fin d'un mouvement est détectée, il s'agit donc soit de l'ajout d'un nouveau document sur la surface de fond courante, soit du retrait d'un document déjà déposé sur la surface de fond. Ainsi, dans le cas d'un empilement de document, tout comme dans le cas d'un dépilement de document, il est prévu de mettre à jour l'image de surface de fond courante de façon à ce qu'elle représente la nouvelle surface de fond prête à éventuellement accueillir un nouveau document.

Cette étape de mise à jour de l'image de la surface de fond courante permet avantageusement un suivi pertinent du mouvement d'un document dans une série d'images captées. En effet, il convient de noter que ce suivi est astucieusement effectué en se référant à cette image de surface de fond courante. Plus précisément, il est prévu de déterminer un masque d'extraction du document pour chaque image captée, ce masque d'extraction étant déterminé sur la base d'une carte d'entropie de l'image captée considérée par rapport à l'image de la surface de fond courante. Il s'agit ici de carte d'entropie différentielle en référence à l'image de surface de fond courante. Sur la base de ces cartes d'entropie différentielles, on est en mesure de suivre le mouvement du document au sein de la série d'images captées. On peut donc avantageusement prévoir qu'à chaque image captée de la série d'images, ou tout au moins pour une partie des images captées de la série d'images, est associé un masque d'extraction qui correspond en quelque sorte à la localisation du document en mouvement dans l'image à laquelle il est associé. L'entropie représente ici un niveau de variation d'information entre le document et le fond caché par le document.

On entend par les termes 'masque d'extraction' d'une image captée, un masque binaire à appliquer à l'image captée de telle sorte qu'il permette de délimiter les contours du document dont la présence a été détectée et de ce fait, qu'il permette d'extraire ce document de cette image captée.

On entend par les termes 'carte d'entropie' d'une image captée, une carte qui fait correspondre une valeur d'entropie à tout ou partie des pixels de l'image captée.

L'ensemble de ces étapes dans un mode de réalisation de la présente invention permet de localiser au fil du temps, de manière pertinente, un document jusqu'au terme de son mouvement, puis de disposer d'un masque d'extraction efficace qui permette in fine le cas échéant d'extraire le document à l'arrêt pour en fournir une image et en faire une lecture dans une étape ultérieure. Tel sera le cas si le mouvement du document détecté est un empilement de document.

Grâce à ces caractéristiques, il est avantageusement possible de tracer le mouvement d'un document dont ni la forme ni le contenu ne sont connus a priori et qui est posé sur une surface de fond qui peut évoluer dans le temps. Ce contexte est particulièrement adapté pour traiter des documents de type 'ticket de jeu'. En effet, des tickets de jeu de différents jeux ne sont pas de forme identique et ne contiennent pas des informations disposées en des localisations identiques pour les différents types de ticket.

Dans une application d'un procédé de traitement de document selon la présente invention à la lecture des tickets de jeu, ces caractéristiques permettent de ne plus avoir de frais de maintenance conséquents des rouleaux mécaniques, puisque dans ce système de traitement de document il est possible qu'un utilisateur du système, comme par exemple un buraliste ou même le joueur lui-même, dépose un ticket de jeu et que ce dernier soit extrait pour être lu, quelque soit sa forme, quelque soit son contenu et quelque soit la façon avec laquelle il a été posé sur la surface du système. De plus, il est avantageux de noter que ce procédé gère l'empilement et le dépilement de document. Ainsi, il est possible qu'un utilisateur quelconque fasse lire plusieurs tickets de jeu à la suite en déposant ces tickets les uns après les autres sur la surface du système prévue à cet effet.

Dans un mode de réalisation de la présente invention, le procédé de traitement de document comprend en outre les étapes suivantes :
- déterminer un sens de mouvement de points caractéristiques du masque d'extraction selon un axe sur la série d'images captées ; et
- si le sens de mouvement correspond à un empilement de document, extraire une image du document à partir d'une image captée.

Ici, il est prévu de déterminer astucieusement le sens de mouvement du document, c'est-à-dire plus exactement de déterminer s'il s'agit d'un empilement ou d'un dépilement de document. Puis, si le mouvement correspond à un empilement de document, cela signifie qu'un nouveau document est à lire et dans ce cas une image du document extrait d'une image captée est alors fournie pour en faire une lecture dans une étape ultérieure.

Afin de déterminer si le mouvement correspond à un empilement, on prend en considération un axe et on détermine le mouvement de certains points caractéristiques du masque d'extraction au fil des images captées. En procédant ainsi, on peut aisément et efficacement en déduire si ce mouvement est un empilement de document. Le système de traitement peut par exemple correspondre à une boite avec une ouverture permettant l'introduction manuelle de documents afin de les déposer sur la surface de pose du système, ou encore référencée 'surface de fond'. Dans ce cas, l'axe selon lequel le mouvement de points caractéristiques est déterminé correspond à l'axe perpendiculaire au plan d'ouverture du système.

De manière générale, cet axe correspond à la direction d'introduction et la direction de dépôt d'un document sur la surface de pose, ou encore surface de fond.

Dans un mode de réalisation de la présente invention, il est prévu d'obtenir le masque d'extraction de l'image captée par application d'un filtrage morphologique et d'une fonction de remplissage.

Il peut en outre être prévu, à l'étape /b/, le fait que le mouvement du document soit suivi sur la base d'une estimation de mouvement par flot optique effectuée sur les images captées.

Une telle caractéristique permet d'obtenir un suivi de mouvement plus précis et plus robuste face à d'éventuelles perturbations. En effet, le flot optique permet de confirmer ou corriger le suivi de mouvement basé sur les cartes d'entropie. On peut ainsi déterminer des masques d'extraction plus fiables en combinant à la fois traitement par entropie et traitement par flot optique pour les déterminer.

Dans un mode de réalisation de la présente invention, à l'étape /c/, on détecte la fin du mouvement du document sur la base des positions des barycentres respectifs des masques d'extraction des images captées successives.

Dans un mode de réalisation de la présente invention, il peut être prévu que, à l'étape /b/, le mouvement du document soit suivi sur la base de la mise en oeuvre d'un filtre de Kalman sur les images captées.

Un deuxième aspect de la présente invention propose un système de traitement de document adapté pour la mise en oeuvre d'un procédé de traitement de document selon le premier aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre les principales étapes d'un procédé selon un mode de réalisation de la présente invention ;
- la figure 2 illustre une fonctionnalité de détection de présence selon un mode de réalisation de la présente invention ;

Dans un mode de réalisation de la présente invention, il est prévu d'obtenir le masque d'extraction de l'image captée par application d'un filtrage morphologique et d'une fonction de remplissage.

Il peut en outre être prévu, à l'étape /b/, le fait que le mouvement du document soit suivi sur la base d'une estimation de mouvement par flot optique effectuée sur les images captées.

Une telle caractéristique permet d'obtenir un suivi de mouvement plus précis et plus robuste face à d'éventuelles perturbations. En effet, le flot optique permet de confirmer ou corriger le suivi de mouvement basé sur les cartes d'entropie. On peut ainsi déterminer des masques d'extraction plus fiables en combinant à la fois traitement par entropie et traitement par flot optique pour les déterminer.

Dans un mode de réalisation de la présente invention, à l'étape /c/, on détecte la fin du mouvement du document sur la base des positions des barycentres respectifs des masques d'extraction des images captées successives.

Dans un mode de réalisation de la présente invention, il peut être prévu que, à l'étape /b/, le mouvement du document soit suivi sur la base de la mise en oeuvre d'un filtre de Kalman sur les images captées.

Un deuxième aspect de la présente invention propose un système de traitement de document adapté pour la mise en oeuvre d'un procédé de traitement de document selon le premier aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

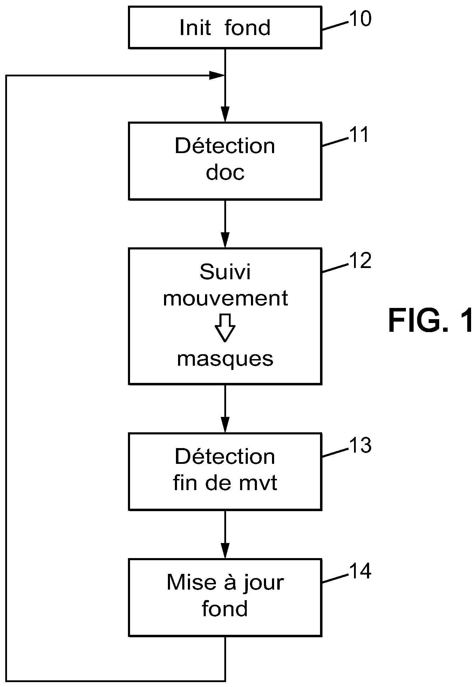

- la figure 1 illustre les principales étapes d'un procédé selon un mode de réalisation de la présente invention ;

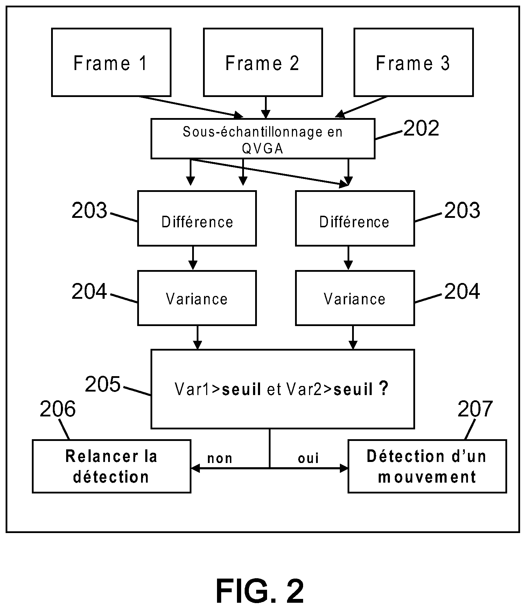

- la figure 2 illustre une fonctionnalité de détection de présence selon un mode de réalisation de la présente invention ;

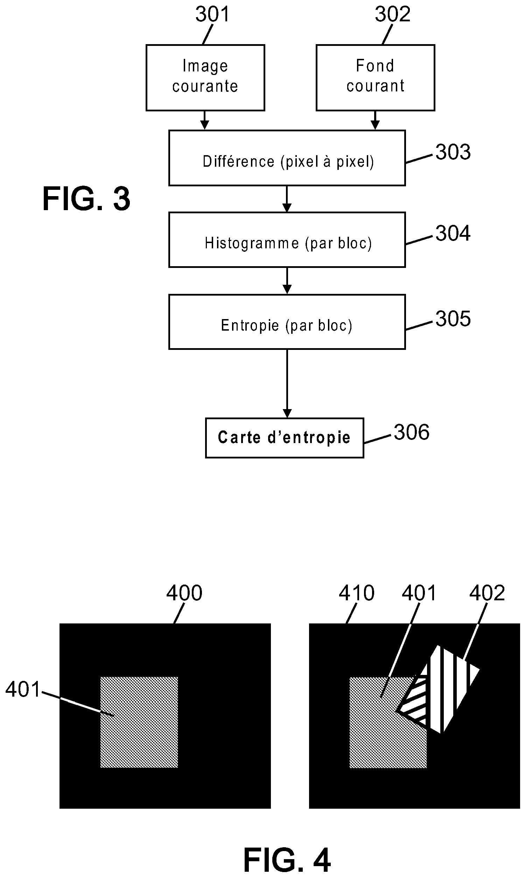

- la figure 3 illustre une détermination de carte d'entropie selon un mode de réalisation de la présente invention ;
- la figure 4 illustre un mode de réalisation de la présente invention dans lequel le masque d'extraction est déterminé en deux parties ;

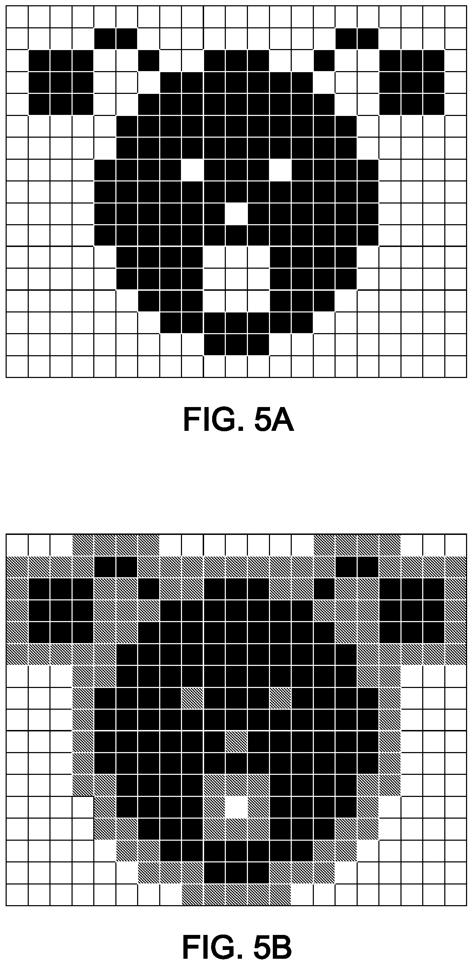

- les figures 5-A à 5-D illustre une application d'opérateur morphologique à un masque d'extraction selon un mode de réalisation de la présente invention ;

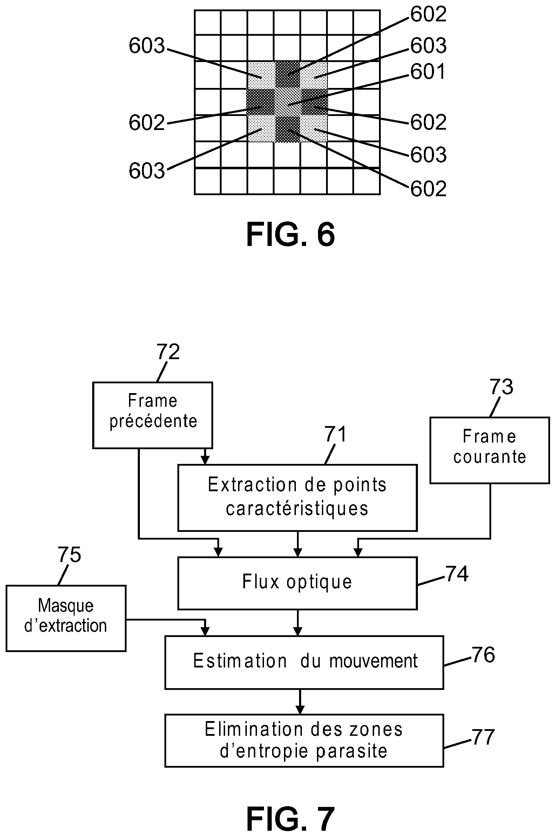

- la figure 6 illustre une étape de détermination de composantes connexes selon un mode de réalisation de la présente invention ;
- la figure 7 illustre la prise en compte d'une estimation de mouvement basée sur une détermination de flot optique selon un mode de réalisation de la présente invention ;

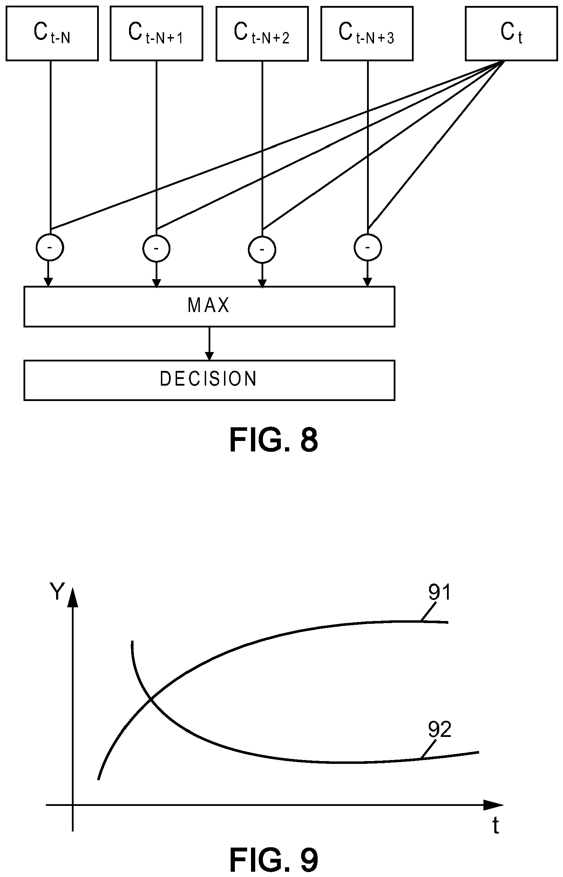

- la figure 8 illustre une étape de détection de fin de mouvement selon un mode de réalisation de la présente invention ;
- la figure 9 illustre une prise de décision quant à un dépilement ou un empilement de document selon un mode de réalisation de la présente invention ; et

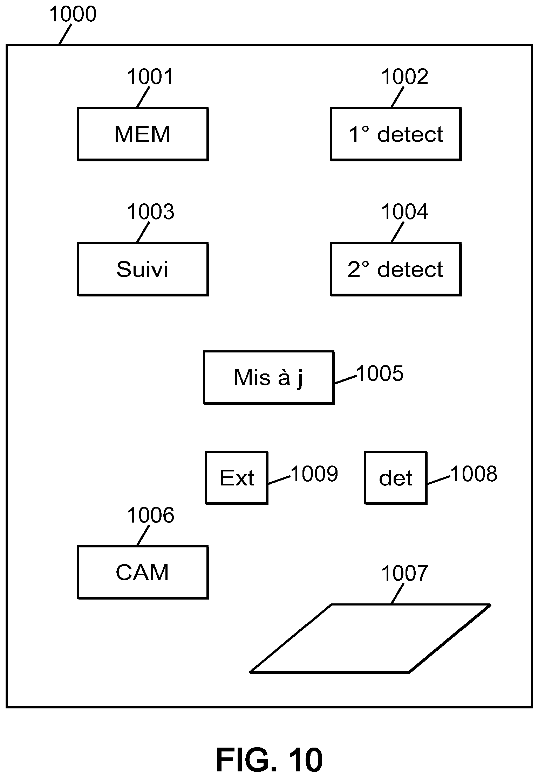

- la figure 10 illustre un système de traitement de document selon un mode de réalisation de la présente invention.

La figure 1 illustre les principales étapes d'un procédé de traitement de document selon un mode de réalisation de la présente invention.

Ce procédé est mis en oeuvre dans un système comprenant, d'une part, un dispositif adapté pour fournir des images captées successives et, d'autre part, une surface de fond. Ainsi, tout document retiré ou déposé sur la surface de fond peut être traité sur la base de la série d'images captées selon un mode de réalisation de la présente invention.

Il convient de mémoriser une image de surface de fond courante au niveau du système. Cette image de surface de fond courante représente la surface de fond sur laquelle un document peut être notamment déposé.

Il est ici prévu dans cet exemple une étape d'initialisation consistant à déterminer une image représentant la surface de fond en une étape préalable 10.

Puis, à une étape 11, on détecte la présence d'un document en mouvement dans une série d'images captées par rapport à l'image de surface de fond courante. A cette étape, il est prévu d'analyser de manière constante dans le temps, la présence nouvelle d'un mouvement dans la série d'images captées.

A une étape 12, on suit le mouvement du document au sein de la série d'images captées. Dans un mode de réalisation de la présente invention, le mouvement du document est suivi en déterminant des masques d'extraction du document respectivement pour les images captées. Chaque masque d'extraction d'une image captée est obtenu sur la base d'une carte d'entropie de l'image captée par rapport à l'image de surface de fond courante. Dans un mode de réalisation de la présente invention, chaque carte d'entropie d'une image captée est déterminée sur la base de valeurs d'entropie associées aux pixels de l'image captée considérée. Plus précisément, on peut déterminer une valeur d'entropie pour chaque pixel, ou groupe de pixels de l'image captée considérée (ou tout au moins d'une partie pertinente de cette image captée dans le cas où on n'effectue les calculs que dans une zone de recherche pertinente des images captées) sur la base d'une différence de niveaux de gris entre l'image de surface de fond courante et l'image captée. Puis, on peut normaliser ces valeurs d'entropie sur une plage de valeurs entre 0 et 255. Ainsi, par comparaison par rapport à une ou plusieurs valeurs seuil, on sélectionne une partie de l'image captée qui correspond au document dont le mouvement est détecté.

A une étape 13, on détecte la fin du mouvement du document.

Puis, à une étape 14, on met à jour l'image de surface de fond courante. Ensuite, il est prévu de revenir dans l'étape 11.

Les sections suivantes décrivent en détail une mise en oeuvre de chaque fonctionnalité du procédé de traitement d'un document selon un mode de réalisation de la présente invention.

La figure 2 illustre une fonctionnalité de détection de document 11, ou encore fonctionnalité de détection de présence d'un document selon un mode de réalisation de la présente invention.

Dans ce mode de réalisation, la fonctionnalité de détection de présence d'un document est basée sur trois images captées qui peuvent par exemple être consécutives : Frame 1, Frame 2 et Frame 3 (ou encore Image 1, Image 2 et Image 3). Il est prévu de sous échantillonner 202 dans une première phase les images captées sous une forme d'affichage de type QVGA (pour 'Quater Video Graphics Array' en anglais, avec 320 pixels sur 240 pixels). Puis, on obtient des images dites 'images de différence' 203 qui illustrent les différences entre les images captées successives deux à deux. Dans le cas illustré ici, on obtient ainsi une première image de différence entre l'image 1 et l'image 2 et une seconde image de différence entre l'image 2 et l'image 3. Ensuite, on calcule 204 une valeur de variance globale pour chacune des deux images de différence. Puis, on peut prévoir que si les valeurs de ces variances globales sont supérieures à une valeur seuil fixée, on décide que l'on a détecté un mouvement 205 et 207. Dans le cas contraire, on applique cette fonction de détection de présence à un triplet d'images suivant 205 et 206.

Les sections suivantes détaillent une fonctionnalité de suivi de mouvement 12 selon un mode de réalisation de la présente invention.

En premier lieu, dans une étape initiale, il est prévu de mémoriser une image de la surface de fond vide, c'est-à-dire sans qu'aucun document ne soit déposé sur cette surface. Lorsque la surface de fond initiale est une surface uniforme, cette étape peut être effectuée sur la base d'une détection d'uniformité de l'image captée. Durant le suivi de mouvement, on est alors en mesure de vérifier si l'on retrouve la surface de fond de référence, afin de mettre à jour l'image de surface de fond courante dans ce cas et de stopper le suivi de mouvement.

A cet effet, il est prévu d'effectuer un calcul d'uniformité d'une image captée en se basant sur un calcul de moyenne des écarts types (c'est à dire un calcul de racine carrée de variance) relativement à des blocs de l'image captée considérée. Pour ce faire, on découpe l'image captée en blocs de pixels. Puis, pour chaque bloc de pixels, on détermine une valeur d'écart type. Enfin, on estime une valeur moyenne de ces écarts types sur tous les blocs de l'image captée. On obtient alors une valeur qui est ici référencée en tant que valeur d'uniformité. Celle-ci sert à déterminer si l'image captée correspond à une image de surface de fond de référence, c'est la surface de fond vierge sans document. Plus précisément, si cette valeur d'uniformité est inférieure à un certain seuil, on décide alors que l'image représente le fond de référence. Ce fond de référence est alors mémorisé, par exemple au format QVGA selon une des composantes de l'image, en vue de sa réutilisation pour établir des cartes d'entropie ultérieurement.

Lorsqu'un mouvement de document est détecté, il peut aboutir à trois situations différentes :
- soit un empilement, c'est-à-dire l'ajout d'un nouveau document et dans ce cas il est utile de procéder à son extraction dans l'image captée,
- soit un dépilement, c'est-à-dire le retrait d'un ou plusieurs documents,
- soit encore le retrait de tous documents et donc l'obtention de la surface de fond de référence.

Dans un mode de réalisation, il est prévu de faire le suivi de mouvement sur la base de masques d'extraction qui sont obtenus à la fois grâce à des calculs d'entropie et des estimations de mouvement par flot optique.

La figure 3 illustre une détermination de carte d'entropie selon un mode de réalisation de la présente invention.

Afin de déterminer la carte d'entropie d'une image captée, on prévoit de calculer ici une différence d'image 303 en niveaux de gris, pixel à pixel, entre cette image captée 301 (ou 'frame courante') et l'image de surface de fond courante 302. On détermine ensuite un histogramme des niveaux de gris pour chaque bloc de pixels de l'image captée. Puis sur la base d'un histogramme 304 des niveaux de gris par bloc de pixels, on calcule une valeur d'entropie 305 associée à chaque bloc de l'image, c'est-à-dire que l'on associe à chaque pixel d'un même bloc la valeur d'entropie déterminée pour ce bloc. La carte d'entropie correspond à ces valeurs d'entropie sur l'image captée considérée.

La section suivante décrit un tel calcul d'entropie selon un mode de réalisation de la présente invention. On définit une taille de bloc 'BSize' et une taille de pas de balayage 'StepSize'.

Une fois que la carte d'entropie est calculée par blocs sur toute l'image de différence, on normalise les valeurs obtenues entre 0-255 niveaux.

Plus précisément, on peut obtenir une carte d'entropie comme suit :
- pour chaque bloc Bsize x Bsize, on estime un niveau d'entropie des niveaux de gris de pixels ;
- on affecte ensuite cette valeur d'entropie aux pixels centraux du sous bloc StepSize x StepSize ; et
- on déplace enfin le Bloc BSize de StepSize pour réitérer le processus jusqu'à balayer toute l'image captée considérée.

Dans un mode de réalisation de la présente invention, on détermine le masque d'extraction en fonction d'une première et d'une seconde zone. La figure 4 illustre un tel mode de réalisation. Ici, la détermination de masque d'extraction passe par une étape intermédiaire où l'on repére deux régions distinctes sur la carte d'entropie que l'on seuille d'abord indépendemment, relativement à deux valeurs seuil distinctes, et que l'on unit ensuite.

La figure 4 illustre une image captée 400 qui représente une surface de pose sur laquelle est déposé un document 401. Une fois que le document 401 est déposé de manière stable sur la surface de pose, l'image 400 est mémorisée en tant qu'image de surface de fond courante. Puis, cette figure 4 illustre également une image captée 410 qui représente l'image de la surface de fond courante 400 sur laquelle est en train d'être déposé un nouveau document 402. A ce stade, le document 402 recouvre partiellement le document 401. Ainsi, on peut considérer le nouveau document 402 selon deux régions : une première région qui correspond à la partie commune entre les documents 401 et 402 et une seconde région qui correspond au reste du document 402.

Pour la première région, il est alors prévu d'effectuer un ET logique entre le masque d'extraction précédemment calculé pour l'image captée 400 et le masque d'extraction de l'image captée 410.

In fine, on obtient alors une première partie de carte d'entropie pour la première région du document 402 et une seconde partie de carte d'entropie pour la seconde région du document 402. On peut ensuite définir deux valeurs seuil distinctes pour établir le masque d'extraction, la valeur seuil de la partie commune étant supérieure à la valeur seuil associée à l'autre partie afin d'éviter les éventuelles perturbations dues au système et à la présence du ticket déjà déposé. Pour obtenir le masque d'extraction complet il suffit alors d'effectuer un OU logique pour concaténer les deux parties du masque.

Dans un mode de réalisation, il est prévu d'appliquer ensuite des opérateurs morphologiques pour éliminer des régions parasitaires non pertinentes qui pourraient apparaitre sur le masque d'extraction obtenu à ce stade.

Il peut ainsi être avantageux d'appliquer une fermeture morphologique qui correspond à la succession de deux opérations élémentaires : une dilatation puis une érosion.

On applique un opérateur morphologique qui permet de connecter des régions du masque d'extraction qui apparaissent comme déconnectées. Tel peut être le cas lorsqu'il existe des grandes zones uniformes dans le document considéré. Dans ce cas une valeur d'entropie pour ces zones uniformes peut être nulle ou quasiment dans ces régions.

Or, il est avantageux que le masque d'extraction représente tout le document afin de pouvoir l'extraire d'images captées. Il peut ainsi être avantageux d'appliquer une ouverture morphologique qui correspond à la succession de deux opérations élémentaires : une érosion puis une dilatation.

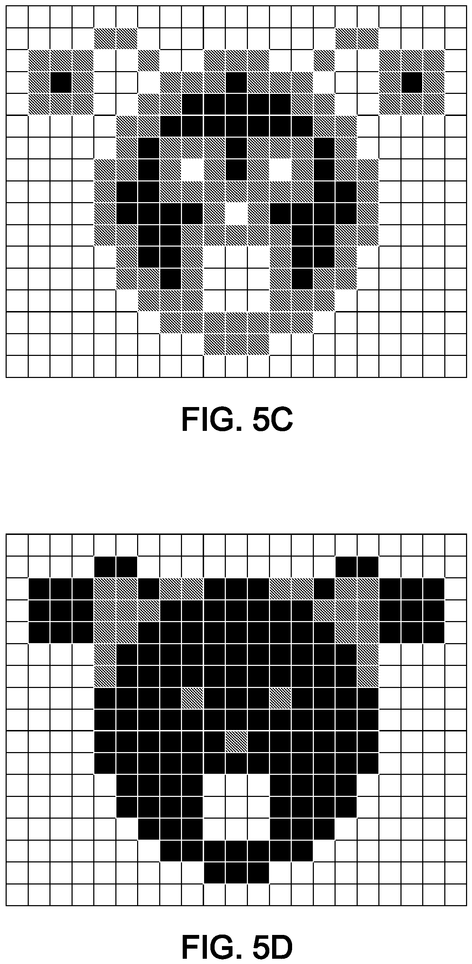

Au cours d'une dilatation, il s'agit d'utiliser un élément structurant pour dilater une image exprimée sous forme binaire. Au cours d'une érosion, on utilise un élément structurant pour éroder la structure de l'image binaire. Les figures 5-A à 5-D illustrent de telles opérations selon un mode de réalisation de la présente invention. La figure 5-A illustre le masque d'extraction avant application d'opérateur morphologique. La figure 5-B illustre une opération de dilation appliquée sur ce masque d'extraction. Cette dilation est ici basée sur un élément structurant correspondant à un carré de dimension 3x3. La figure 5-C illustre l'application d'une érosion à la structure dilatée obtenue telle qu'illustrée en figure 5-B. Cette érosion est également basée sur un élément structurant correspondant à un carré 3x3. Enfin, la figure 5-D illustre un masque d'extraction obtenu après une réitération d'opérations de dilatation et d'érosion successives selon un mode de réalisation de la présente invention.

Puis, une étape de détermination de composantes connexes permet de trier et de filtrer les régions obtenues selon le masque d'extraction en fonction de leur taille notamment. En effet, de telles composantes connexes permettent de déterminer les régions du masque d'extraction qui sont connectées entre elles. Dans un mode de réalisation de la présente invention, on recherche des régions connexes par voisinage. Plus précisément, deux pixels sont considérés voisins ici s'ils peuvent satisfaire à une relation de voisinage de type 4, tel que l'illustre la figure 6. Sur cette figure 6, quatre pixels 602 sont voisins d'un pixel 601, des pixels 603 n'étant pas voisins de ce pixel 601. Sur la base de cette règle de voisinage, on balaye le masque d'extraction en vérifiant si cette relation est vérifiée et on décide en conséquence de créer ou de ne pas créer une nouvelle région du masque d'extraction.

Puis, dans un mode de réalisation de la présente invention, il est prévu d'appliquer une fonction de remplissage qui permet de combler des trous restants dans le masque d'extraction obtenu à ce stade. A cet effet, on repère des extrémités sur chaque ligne et sur chaque colonne du masque d'extraction dans le sens vertical et horizontal. Une fois ces extrémités repérées, on remplit chaque ligne et chaque colonne pour combler les éventuels trous du masque.

On peut alors prévoir de prendre en compte une estimation de mouvement basée sur une détermination de flot optique, afin d'affiner les informations du masque d'extraction jusqu'ici obtenu. Alternativement bien entendu, on peut aussi prévoir de mettre en oeuvre un filtre de Kalman sur les images captées pour estimer ce mouvement de document.

Le flot optique permet de déterminer le déplacement des pixels d'une image entre deux images successives. Cette prise en compte d'un flot optique est particulièrement adaptée au cas où la dépose d'un nouveau document entraîne la mobilité de certains documents précédemment déposés et compris dans l'image de surface de fond courante considérée. Pour estimer un mouvement de document par flot optique, on peut envisager d'estimer le mouvement de certains points caractéristiques extraits du document en mouvement. Ces points caractéristiques peuvent notamment être des coins dans le document que l'on peut détecter grâce à un détecteur (ou encore filtre) de Harris.

La figure 7 illustre une telle fonctionnalité selon un mode de réalisation de la présente invention. Une extraction de points caractéristiques 71 peut être effectuée sur la base de l'image captée précédente 72. Puis, en ces points caractéristiques, on estime le mouvement du document par flot optique entre l'image captée précédente 72 et l'image courante 73. A ce stade, on peut avantageusement prendre en compte d'une part le masque d'extraction 75 déterminé comme décrit précédemment et le mouvement estimé par flot optique afin de combiner ces informations de mouvement et réduire d'éventuelles erreurs. On obtient alors une estimation de mouvement combinée 76 qui permet d'éliminer en une étape 77 des zones parasitaires du masque d'extraction.

Il convient de noter que, grâce au flot optique, on peut estimer un vecteur de déplacement moyen des pixels du document en mouvement. Ainsi, on peut délimiter efficacement la zone de mouvement du document entrant, et supprimer alors les zones de mouvement parasites autour de cette zone de mouvement. Les zones de mouvement parasites peuvent par exemple être liées au mouvement d'un ticket du fond.

La figure 8 illustre une étape de détection de fin de mouvement selon un mode de réalisation de la présente invention. Afin de décider si le document est stable ou non, il est prévu ici d'analyser des positions des barycentres des masques d'extraction obtenus pour les N dernières images captées. Sur la figure 8, C_{t-N}, C_{t-N+1}, C_{t-N+2}, C_{t-N+3}, représentent les positions respectives du barycentre de certaines images captées précédentes. Puis, on calcule pour l'image captée courante I, les différences de position de barycentre entre la position du barycentre de l'image courante et la position du barycentre des images précédentes mémorisées.

Ensuite, si la valeur maximale de ces différences est inférieure à un seuil donné, alors on peut décider que le document est stable et que donc son mouvement est fini.

Une fois que l'on détecte la fin du mouvement du document, on décide si l'on est en présence d'un dépilement ou d'un empilement de document. La figure 9 illustre une telle décision.

Pour ce faire, il est prévu dans un mode de réalisation de la présente invention de se baser sur une trajectoire globale de points caractéristiques extraits du document. On peut utiliser notamment les points caractéristiques qui ont servis au calcul du flot optique. Ces points peuvent correspondre à des coins que l'on extrait sur l'image en niveau de gris grâce à un filtre de Harris. En analysant la trajectoire globale de ces points caractéristiques selon une composante, on peut différencier les actions d'empilement ou de dépilement. Afin d'accroitre la fiabilité de cette fonctionnalité, il peut être avantageux de prévoir une segmentation de la peau, afin de dissocier la zone de mouvement de la peau de la zone de mouvement du document. La figure 9 illustre le sens de mouvement de points caractéristiques en fonction d'un axe Y en ordonnée et du temps en abscisse. L'axe Y peut correspondre à l'axe selon lequel on dirige le document soit quand on le dépose sur la surface de fond soit quand on le retire de la surface de fond. La courbe 91 peut ainsi correspondre à un empilement de document alors que la courbe 92 correspond à un dépilement de document.

La figure 10 illustre un système de traitement de document selon un mode de réalisation de la présente invention.

Un système de traitement de document comprend, d'une part, un dispositif adapté pour fournir des images captées successives 1006 et, d'autre part, une surface de fond 1007.

Il comprend en outre :
- une mémoire 1001 pour mémoriser une image de surface de fond courante ;
- une première unité de détection 1002 adaptée pour détecter la présence d'un document en mouvement dans une série d'images captées par rapport à l'image de surface de fond courante ;
- une unité de suivi 1003 adaptée pour suivre ledit mouvement du document au sein de ladite série d'images ;
- une seconde unité de détection 1004 adaptée pour détecter la fin du mouvement dudit document ; et
- une unité de mise à jour 1005 adaptée pour mettre à jour l'image de surface de fond courante ;
dans lequel, l'unité de suivi est apte à suivre le mouvement du document en déterminant des masques d'extraction du document respectivement pour les images captées, le masque d'extraction d'une image captée étant obtenu sur la base d'une carte d'entropie de ladite image captée par rapport à ladite image de surface de fond courante.

Le système peut comprendre également une unité de détermination 1008 adaptée pour déterminer un sens de mouvement de points caractéristiques du masque d'extraction selon un axe sur la série d'images captées ; et une unité d'extraction 1009 adaptée pour extraire, si le sens de mouvement correspond à un empilement de document, une image du document à partir d'une image captée.

L'unité de suivi 1003 peut déterminer un masque d'extraction pour une image captée donnée par :
/i/ obtention d'une carte d'entropie sur la base d'une différence en niveaux de gris entre l'image de surface de fond courante et l'image captée donnée, ladite carte d'entropie associant aux pixels de l'image des valeurs respectives d'entropie ;
/ii/ normalisation des valeurs d'entropie de ladite carte d'entropie en obtenant des valeurs normées d'entropie sur une échelle de 0-255 ; et
/iii/ détermination d'un masque d'extraction du document de l'image captée

Le masque d'extraction de l'image captée peut en outre être affiné par application d'un filtrage morphologique et d'une fonction de remplissage.

L'unité de suivi peut en outre être adaptée pour suivre le mouvement sur la base d'une estimation de mouvement par flot optique effectuée sur les images captées.

La seconde unité de détection peut détecter la fin du mouvement du document sur la base des positions des barycentres respectifs des masques d'extraction des images captées successives.

L'unité de suivi 1003 peut déterminer un masque d'extraction pour une image captée donnée par :
/i/ obtention d'une carte d'entropie sur la base d'une différence en niveaux de gris entre l'image de surface de fond courante et l'image captée donnée, ladite carte d'entropie associant aux pixels de l'image des valeurs respectives d'entropie ;
/ii/ normalisation des valeurs d'entropie de ladite carte d'entropie en obtenant des valeurs normées d'entropie sur une échelle de 0-255 ; et
/iii/ détermination d'un masque d'extraction du document de l'image captée correspondant aux pixels de l'image captée auxquels sont associés des valeurs normées d'entropie supérieures à une valeur seuil.

L'unité de suivi 1003 peut être en outre adaptée pour :
- déterminer une première zone de ladite image captée correspondant à la zone commune entre la carte d'entropie de l'image captée et le masque d'extraction de l'image captée précédente ;
- déterminer une seconde zone correspondant au masque d'extraction de ladite image captée hors la première zone ; et
dans lequel une première partie du masque d'extraction correspondant aux pixels de l'image captée de la première zone auxquels sont associées des valeurs normalisées d'entropie supérieures à une première valeur seuil et une seconde partie du masque d'extraction correspondant aux pixels de l'image captée de la seconde zone auxquels sont associées des valeurs normalisées d'entropie supérieures à une seconde valeur seuil ; ladite première valeur seuil étant supérieure à ladite seconde valeur seuil.

Le masque d'extraction de l'image captée peut être obtenu par application d'un filtrage morphologique et d'une fonction de remplissage.

L'unité de suivi peut en outre être adaptée pour suivre le mouvement sur la base d'une estimation de mouvement par flot optique effectuée sur les images captées.

La seconde unité de détection 1004 peut détecter la fin du mouvement du document sur la base des positions des barycentres respectifs des masques d'extraction des images captées successives.

## Revendications

1. Procédé de traitement de document dans un système comprenant, d'une part, un dispositif adapté pour fournir des images captées successives et, d'autre part, une surface de fond ;
ledit système mémorisant une image de surface de fond courante;
ledit procédé de traitement comprenant les étapes suivantes :
/a/ détecter (11) la présence d'un document en mouvement dans une série d'images captées par rapport à l'image de surface de fond courante ;
/b/ suivre (12) ledit mouvement du document au sein de ladite série d'images ;
/c/ détecter (13) la fin du mouvement dudit document ; et
/d/ mettre à jour (14) l'image de surface de fond courante ;
dans lequel, à l'étape /b/, le mouvement du document est suivi en déterminant des masques d'extraction du document respectivement pour les images captées, le masque d'extraction d'une image captée étant obtenu selon les étapes suivantes :
/i/ obtenir une carte d'entropie sur la base d'une différence en niveaux de gris entre l'image de surface de fond courante et l'image captée donnée, ladite carte d'entropie associant aux pixels de l'image des valeurs respectives d'entropie ;
/ii/ normaliser les valeurs d'entropie de ladite carte d'entropie en obtenant des valeurs normées d'entropie sur une échelle de 0-255 ; et
/iii/ déterminer un masque d'extraction du document de l'image captée correspondant aux pixels de l'image captée auxquels sont associés des valeurs normées d'entropie supérieures à une valeur seuil, le procédé comprenant en outre les étapes suivantes sur une image captée donnée :
- déterminer une première zone de ladite image captée correspondant à la zone commune entre le masque d'extraction de ladite image captée et le masque d'extraction de l'image captée précédente ;
- déterminer une seconde zone correspondant au masque d'extraction de ladite image captée hors la première zone ; et
dans lequel l'étape /iii/ est effectuée pour la première zone et la seconde zone de l'image captée, une première partie du masque d'extraction de l'image captée correspondant aux pixels de l'image captée de la première zone auxquels sont associées des valeurs normalisées d'entropie supérieures à une première valeur seuil et une seconde partie du masque d'extraction de l'image captée correspondant aux pixels de l'image captée de la seconde zone auxquels sont associées des valeurs normalisées d'entropie supérieures à une seconde valeur seuil ;
ladite première valeur seuil étant supérieure à ladite seconde valeur seuil.

2. Procédé de traitement selon la revendication 1, comprenant en outre les étapes suivantes :
- déterminer un sens de mouvement de points caractéristiques du masque d'extraction selon un axe sur la série d'images captées ; et
- si le sens de mouvement correspond à un empilement de document, extraire une image du document à partir d'une image captée;
les sens de mouvement correspondant respectivement à un empilement et à un dépilement étant différents.

3. Procédé de traitement de document selon la revendication 1 ou 2, dans lequel on obtient une carte d'entropie pour une image captée donnée dans une zone de recherche de mouvement ;
ladite zone de recherche de mouvement étant déterminée sur la base du masque d'extraction déterminé pour l'image captée précédente.

4. Procédé de traitement de document selon l'une quelconque des revendications précédentes, dans lequel le masque d'extraction de l'image captée est obtenu par application d'un filtrage morphologique et d'une fonction de remplissage.

5. Procédé de traitement de document selon l'une quelconque des revendications précédentes, dans lequel, à l'étape /b/, le mouvement du document est en outre suivi sur la base d'une estimation de mouvement par flot optique effectuée sur les images captées.

6. Procédé de traitement de document selon l'une des revendications 1 à 4, dans lequel à l'étape /b/, le mouvement du document est suivi sur la base de la mise en oeuvre d'un filtre de Kalman sur les images captées.

7. Procédé de traitement de document selon l'une quelconque des revendications précédentes, dans lequel, à l'étape /c/, on détecte la fin du mouvement du document sur la base des positions des barycentres respectifs des masques d'extraction des images captées successives.

8. Système de traitement de document (1000) comprenant, d'une part, un dispositif (1006) adapté pour fournir des images captées successives et, d'autre part, une surface de fond (1007) ;
ledit système comprenant :
- une mémoire (1001) pour mémoriser une image de surface de fond courante ;
- une première unité de détection (1002) adaptée pour détecter la présence d'un document en mouvement dans une série d'images captées par rapport à l'image de surface de fond courante ;
- une unité de suivi (1003) adaptée pour suivre ledit mouvement du document au sein de ladite série d'images ;
- une seconde unité de détection (1004) adaptée pour détecter la fin du mouvement dudit document ; et
- une unité de mise à jour (1005) adaptée pour mettre à jour l'image de surface de fond courante ;
dans lequel, l'unité de suivi est apte à suivre le mouvement du document en déterminant des masques d'extraction du document respectivement pour les images captées, l'unité de suivi étant adaptée pour déterminer un masque d'extraction pour une image captée donnée par :
/i/ obtention d'une carte d'entropie sur la base d'une différence en niveaux de gris entre l'image de surface de fond courante et l'image captée donnée, ladite carte d'entropie associant aux pixels de l'image des valeurs respectives d'entropie ;
/ii/ normalisation des valeurs d'entropie de ladite carte d'entropie en obtenant des valeurs normées d'entropie sur une échelle de 0-255 ; et
/iii/ détermination d'un masque d'extraction du document de l'image captée correspondant aux pixels de l'image captée auxquels sont associés des valeurs normées d'entropie supérieures à une valeur seuil,
- l'unité de suivi (1003) étant en outre adaptée pour : déterminer une première zone de ladite image captée correspondant à la zone commune entre le masque d'extraction de l'image captée et le masque d'extraction de l'image captée précédente ;
- déterminer une seconde zone correspondant au masque d'extraction de ladite image captée hors la première zone ; et
dans lequel une première partie du masque d'extraction correspondant aux pixels de l'image captée de la première zone auxquels sont associées des valeurs normalisées d'entropie supérieures à une première valeur seuil et une seconde partie du masque d'extraction correspondant aux pixels de l'image captée de la seconde zone auxquels sont associées des valeurs normalisées d'entropie supérieures à une seconde valeur seuil ; ladite première valeur seuil étant supérieure à ladite seconde valeur seuil.

9. Système de traitement de document selon la revendication 8, comprenant en outre :
- une unité de détermination (1008) adaptée pour déterminer un sens de mouvement de points caractéristiques du masque d'extraction selon un axe sur la série d'images captées ; et
- une unité d'extraction (1009) adaptée pour extraire, si le sens de mouvement correspond à un empilement de document, une image du document à partir d'une image captée;
les sens de mouvement correspondant respectivement à un empilement et à un dépilement étant différents.

10. Système de traitement de document selon l'une quelconque des revendications 8 ou 9, dans lequel le masque d'extraction de l'image captée est obtenu par application d'un filtrage morphologique et d'une fonction de remplissage.

11. Système de traitement de document selon l'une quelconque des revendications 8 à 10, dans lequel l'unité de suivi est en outre adaptée pour suivre le mouvement sur la base d'une estimation de mouvement par flot optique effectuée sur les images captées.

12. Système de traitement de document selon l'une quelconque des revendications 8 à 11, dans lequel la seconde unité de détection détecte la fin du mouvement du document sur la base des positions des barycentres respectifs des masques d'extraction des images captées successives.

## Patentansprüche

1. Verfahren zur Dokumentverarbeitung in einem System, umfassend einerseits eine Vorrichtung, die angepasst ist, aufeinanderfolgende aufgezeichnete Bilder zu liefern, und andererseits eine Hintergrundfläche;
wobei das System ein aktuelles Hintergrundflächenbild speichert;
wobei das Verarbeitungsverfahren die folgenden Schritte umfasst:
/a/ Erkennen (11) des Vorhandenseins eines Dokuments in Bewegung bei einer Serie aus aufgezeichneten Bildern bezogen auf das aktuelle Hintergrundflächenbild;
/b/ Verfolgen (12) der Bewegung des Dokuments innerhalb der Bilderserie;
/c/ Erkennen (13) des Endes der Bewegung des Dokuments;
und
/d/ Aktualisieren (14) des aktuellen Hintergrundflächenbilds;
wobei im Schritt /b/ die Bewegung des Dokuments verfolgt wird, indem Extraktionsmasken des Dokuments bzw. für die aufgezeichneten Bilder bestimmt werden, wobei die Extraktionsmaske eines aufgezeichneten Bilds gemäß folgenden Schritten erhalten wird:
/i/ Erhalten einer Entropiekarte auf Grundlage eines Graustufenunterschieds zwischen dem aktuellen Hintergrundflächenbild und dem gegebenen aufgezeichneten Bild, wobei die Entropiekarte den Pixeln des Bilds jeweilige Entropiewerte zuordnet;
/ii/ Normalisieren der Entropiewerte der Entropiekarte, indem normierte Entropiewerte auf einer Skala von 0 bis 255 erhalten werden; und
/iii/ Bestimmen einer Extraktionsmaske des Dokuments des aufgezeichneten Bilds, die den Pixeln des aufgezeichneten Bilds entspricht, denen normierte Entropiewerte zugeordnet sind, die höher als ein Schwellenwert sind, wobei das Verfahren ferner die folgenden Schritte bei einem gegebenen aufgezeichneten Bild umfasst:
- Bestimmen eines ersten Bereichs des aufgezeichneten Bilds, der dem gemeinsamen Bereich zwischen der Extraktionsmaske des aufgezeichneten Bilds und der Extraktionsmaske des vorigen aufgezeichneten Bilds entspricht;
- Bestimmen eines zweiten Bereichs, der der Extraktionsmaske des aufgezeichneten Bilds außerhalb des ersten Bereichs entspricht; und wobei der Schritt /iii/ für den ersten Bereich und den zweiten Bereich des aufgezeichneten Bilds ausgeführt wird, wobei ein erster Abschnitt der Extraktionsmaske des aufgezeichneten Bilds den Pixeln des aufgezeichneten Bilds des ersten Bereichs entspricht, denen normalisierte Entropiewerte zugeordnet sind, die höher als ein erster Schwellenwert sind, und wobei ein zweiter Abschnitt der Extraktionsmaske des aufgezeichneten Bilds den Pixeln des aufgezeichneten Bilds des zweiten Bereichs entspricht, denen normalisierte Entropiewerte zugeordnet sind, die höher als ein zweiter Schwellenwert sind;
wobei der erste Schwellenwert höher als der zweite Schwellenwert ist.

2. Verfahren zur Dokumentverarbeitung nach Anspruch 1, ferner umfassend die folgenden Schritte:
- Bestimmen einer Bewegungsrichtung von Merkmalspunkten der Extraktionsmaske gemäß einer Achse bei der Serie aus aufgezeichneten Bildern; und
- Extrahieren eines Bilds des Dokuments anhand eines aufgezeichneten Bilds, sofern die Bewegungsrichtung einem Stapeln von Dokumenten entspricht;
wobei die Bewegungsrichtungen, die jeweils einem Stapeln und einem Entstapeln entsprechen,
unterschiedlich sind.

3. Verfahren zur Dokumentverarbeitung nach Anspruch 1 oder 2, wobei eine Entropiekarte für ein gegebenes aufgezeichnetes Bild in einem Bewegungssuchbereich erhalten wird;
wobei der Bewegungssuchbereich anhand der Extraktionsmaske bestimmt wird, die für das vorige aufgezeichnete Bild bestimmt wurde.

4. Verfahren zur Dokumentverarbeitung nach einem der vorhergehenden Ansprüche, wobei die Extraktionsmaske des aufgezeichneten Bilds durch Anwendung einer morphologischen Filterung und einer Füllfunktion erhalten wird.

5. Verfahren zur Dokumentverarbeitung nach einem der vorhergehenden Ansprüche, wobei im Schritt /b/ die Bewegung des Dokuments ferner anhand einer Bewegungsschätzung durch optischen Strom verfolgt wird, die an den aufgezeichneten Bildern durchgeführt wird.

6. Verfahren zur Dokumentverarbeitung nach einem der Ansprüche 1 bis 4, wobei im Schritt /b/ die Bewegung des Dokuments ferner anhand der Anwendung eines Kalman-Filters auf die aufgezeichneten Bilder durchgeführt wird.

7. Verfahren zur Dokumentverarbeitung nach einem der vorhergehenden Ansprüche, wobei im Schritt /c/ das Ende der Bewegung des Dokuments anhand der Positionen der jeweiligen Baryzentren der Extraktionsmasken der aufeinanderfolgenden aufgezeichneten Bilder erkannt wird.

8. System zur Dokumentverarbeitung (1000), umfassend einerseits eine Vorrichtung (1006), die angepasst ist, aufeinanderfolgende aufgezeichnete Bilder zu liefern, und andererseits eine Hintergrundfläche (1007);
wobei das System Folgendes umfasst:
- einen Speicher (1001), um ein aktuelles Hintergrundflächenbild zu speichern;
- eine erste Erkennungseinheit (1002), die angepasst ist, das Vorhandensein eines Dokuments in Bewegung bei einer Serie aus aufgezeichneten Bildern bezogen auf das aktuelle Hintergrundflächenbild zu erkennen;
- eine Verfolgungseinheit (1003), die angepasst ist, die Bewegung des Dokuments innerhalb der Bilderserie zu verfolgen;
- eine zweite Erkennungseinheit (1004), die angepasst ist, das Ende der Bewegung des Dokuments zu erkennen; und
- eine Aktualisierungseinheit (1005), die angepasst ist, das aktuelle Hintergrundflächenbild zu aktualisieren;
wobei die Verfolgungseinheit in der Lage ist, die Bewegung des Dokuments zu verfolgen, indem die Extraktionsmasken des Dokuments bzw. für die aufgezeichneten Bilder bestimmt werden, wobei die Verfolgungseinheit angepasst ist, eine Extraktionsmaske für ein gegebenes aufgezeichnetes Bild zu bestimmen, indem
/i/ eine Entropiekarte auf Grundlage eines Graustufenunterschieds zwischen dem aktuellen Hintergrundflächenbild und dem gegebenen aufgezeichneten Bild erhalten wird, wobei die Entropiekarte den Pixeln des Bilds jeweilige Entropiewerte zuordnet;
/ii/ die Entropiewerte der Entropiekarte normalisiert werden, indem normierte Entropiewerte auf einer Skala von 0 bis 255 erhalten werden; und
/iii/ eine Extraktionsmaske des Dokuments des aufgezeichneten Bilds bestimmt wird, die den Pixeln des aufgezeichneten Bilds entspricht, denen normierte Entropiewerte zugeordnet sind, die höher als ein Schwellenwert sind,
- wobei die Verfolgungseinheit (1003) ferner angepasst ist: einen ersten Bereich des aufgezeichneten Bilds zu bestimmen, der dem gemeinsamen Bereich zwischen der Extraktionsmaske des aufgezeichneten Bilds und der Extraktionsmaske des vorigen aufgezeichneten Bilds entspricht;
- einen zweiten Bereich zu bestimmen, der der Extraktionsmaske des aufgezeichneten Bilds außerhalb des ersten Bereichs entspricht; und
wobei ein erster Abschnitt der Extraktionsmaske, der den Pixeln des aufgezeichneten Bilds des ersten Bereichs entspricht, denen normalisierte Entropiewerte zugeordnet sind, die höher als ein erster Schwellenwert sind, und ein zweiter Abschnitt der Extraktionsmaske, der den Pixeln des aufgezeichneten Bilds des zweiten Bereichs entspricht, denen normalisierte Entropiewerte zugeordnet sind, die höher als ein zweiter Schwellenwert sind;
wobei der erste Schwellenwert höher als der zweite Schwellenwert ist.

9. System zur Dokumentverarbeitung nach Anspruch 8, ferner umfassend:
- eine Bestimmungseinheit (1008), die angepasst ist, eine Bewegungsrichtung von Merkmalspunkten der Extraktionsmaske gemäß einer Achse bei der Serie aus aufgezeichneten Bildern zu bestimmen; und
- eine Extraktionseinheit (1009), die angepasst ist, ein Bild des Dokuments anhand eines aufgezeichneten Bilds zu extrahieren, sofern die Bewegungsrichtung einem Stapeln von Dokument entspricht;
wobei die Bewegungsrichtungen, die jeweils einem Stapeln und einem Entstapeln entsprechen,
unterschiedlich sind.

10. System zur Dokumentverarbeitung nach einem der Ansprüche 8 oder 9, wobei die Extraktionsmaske des aufgezeichneten Bilds durch Anwendung einer morphologischen Filterung und einer Füllfunktion erhalten wird.

11. System zur Dokumentverarbeitung nach einem der Ansprüche 8 bis 10, wobei die Verfolgungseinheit ferner angepasst ist, die Bewegung anhand einer Bewegungsschätzung durch optischen Strom zu verfolgen, die an den aufgezeichneten Bildern durchgeführt wird.

12. System zur Dokumentverarbeitung nach einem der Ansprüche 8 bis 11, wobei die zweite Erkennungseinheit das Ende der Bewegung des Dokuments anhand der Positionen der jeweiligen Baryzentren der Extraktionsmasken der aufeinanderfolgenden aufgezeichneten Bilder erkennt.

## Claims

1. Document processing method in a system comprising on the one hand, a device suitable for supplying successive captured images and, on the other hand, a background surface;
said system storing a current background surface image;
said processing method comprising the following steps:
/a/ detecting (11) the presence of a moving document in a series of captured images with respect to the current background surface image;
/b/ monitoring (12) said movement of the document within said series of images;
/c/ detecting (13) the end of the movement of said document; and
/d/ updating (14) the current background surface image;
wherein, in step /b/, the movement of the document is monitored by determining document extraction masks respectively for the captured images, the extraction mask of a captured image being obtained according to the following steps:
/i/ obtaining an entropy map on the basis of a difference in grey levels between the current background surface image and the given captured image, said entropy map associating respective entropy values with the pixels of the image;
/ii/ normalizing the entropy values of said entropy map by obtaining standardized entropy values on a scale of 0-255; and
/iii/ determining an extraction mask of the document from the captured image corresponding to the pixels of the captured image with which standardized entropy values higher than a threshold value are associated, the method further comprising the following steps on a given captured image:
- determining a first zone of said captured image corresponding to the zone that is common to the extraction mask of said captured image and to the extraction mask of the preceding captured image;
- determining a second zone corresponding to the extraction mask of said captured image outside of the first zone; and
wherein step /iii/ is carried out for the first zone and the second zone of the captured image, a first part of the extraction mask of the captured image corresponding to the pixels of the captured image of the first zone with which standardized entropy values higher than a first threshold value are associated and a second part of the extraction mask of the captured image corresponding to the pixels of the captured image of the second zone with which entropy values higher than a second threshold value are associated;
said first threshold value being higher than said second threshold value.

2. Processing method according to claim 1, comprising moreover the following steps:
- determining a direction of movement of characteristic points of the extraction mask according to an axis over the series of captured images; and
- if the direction of movement corresponds to a document stacking, extracting an image of the document from a captured image,
the directions of movement corresponding respectively to a stacking and an unstacking being different.

3. Document processing method according to claim 1 or 2, wherein an entropy map is obtained for a given captured image in a movement search zone;
said movement search zone being determined on the basis of the extraction mask determined for the preceding captured image.

4. Document processing method according to any one of the preceding claims, wherein the extraction mask of the captured image is obtained by application of morphological filtering and of a filling function.

5. Document processing method according to any one of the preceding claims, wherein, in step /b/, the movement of the document is moreover monitored on the basis of an estimation of movement by optical flow carried out on the captured images.

6. Document processing method according to one of claims 1 to 4, wherein, in step /b/, the movement of the document is monitored on the basis of the use of a Kalman filter on the captured images.

7. Document processing method according to any one of the preceding claims, wherein, in step /c/, the end of the movement of the document is detected on the basis of the positions of the respective barycentres of the extraction masks of the successive captured images.

8. Document processing system (1000) comprising, on the one hand, a device (1006) suitable for providing successive captured images and, on the other hand, a background surface (1007).
said system comprising:
- a memory (1001) for storing a current background surface image;
- a first detection unit (1002) suitable for detecting the presence of a moving document in a series of captured images with respect to the current background surface image;
- a monitoring unit (1003) suitable for monitoring said movement of the document within said series of images;
- a second detection unit (1004) suitable for detecting the end of the movement of said document; and
- an updating unit (1005) suitable for updating the current background surface image;
wherein, the monitoring unit is able to monitor the movement of the document by determining extraction masks of the document respectively for the captured images, the monitoring unit being adapted to determine an extraction mask for a given captured image by :
/i/ obtaining an entropy map on the basis of a difference in grey levels between the current background surface image and the given captured image, said entropy map associating respective entropy values with the pixels of the image;
/ii/ normalizing the entropy values of said entropy map by obtaining standardized entropy values on a scale of 0-255; and
/iii/ determining an extraction mask of the document from the captured image corresponding to the pixels of the captured image with which standardized entropy values higher than a threshold value are associated,
the monitoring unit (1003) being further adapted to :
- determine a first zone of said captured image corresponding to the zone that is common to the extraction mask of said captured image and to the extraction mask of the preceding captured image;
- determine a second zone corresponding to the extraction mask of said captured image outside of the first zone; and
wherein a first part of the extraction mask of the captured image corresponding to the pixels of the captured image of the first zone with which standardized entropy values higher than a first threshold value are associated and a second part of the extraction mask of the captured image corresponding to the pixels of the captured image of the second zone with which entropy values higher than a second threshold value are associated;
said first threshold value being higher than said second threshold value.

9. Document processing system according to claim 8, comprising moreover:
- a determination unit (1008) suitable for determining a direction of movement of characteristic points of the extraction mask according to an axis over the series of captured images; and
- an extraction unit (1009) suitable for extracting, if the direction of movement corresponds to a document stacking, an image of the document from a captured image,
the directions of movement corresponding respectively to a stacking and an unstacking being different.

10. Document processing system according to any one of claims 8 or 9, wherein the extraction mask of the captured image is obtained by application of morphological filtering and of a filling function.

11. Document processing system according to any one of claims 8 to 10, wherein the monitoring unit is moreover suitable for monitoring the movement on the basis of an estimation of movement by optical flow carried out on the captured images.

12. Document processing system according to any one of claims 8 to 11, wherein the second detection unit detects the end of the movement of the document on the basis of the positions of the respective barycentres of the extraction masks of the successive captured images.
